# EUROPEAN PATENT APPLICATION

(11) **EP 3 745 047 A1**
(43) Date of publication of application: **02.12.2020**
(21) Application number: 18901941.7
(22) Date of filing: 24.01.2018
(51) Int. Cl.: F25B 1/00, F24F 11/70, F24F 11/86, F25B 13/00

(54) **REFRIGERATION CYCLE DEVICE**

(71) Applicant: Toshiba Carrier Corporation, Kawasaki-Shi, Kanagawa 212-8585 (JP)
(72) Inventor: NAGAI, Hiroyuki, Fuji-shi, Shizuoka 416-8521 (JP); MIURA, Ken, Fuji-shi, Shizuoka 416-8521 (JP); IMATO, Naoki, Fuji-shi, Shizuoka 416-8521 (JP)
(74) Representative: Gramm, Lins & Partner Patent- und Rechtsanwälte PartGmbB
(86) International application number: PCT/JP2018/002166
(87) International publication number: WO 2019/146023

(57) **Abstract**

When reducing the number of operating outdoor units, the outdoor fans of the outdoor units to be stopped are operated at high speed, and the compressors of the outdoor units are operated at low capacity. After continuing the high-speed operation and the low-capacity operation for a prescribed time, the outdoor fans and the compressors of the outdoor unit to be stopped are stopped.

## Description

### Technical Field

Embodiments described herein relate generally to a refrigeration cycle apparatus comprising a plurality of outdoor units and a plurality of indoor units.

### Background Art

A multi-type refrigeration cycle apparatus which comprises a plurality of outdoor units and a plurality of indoor units connected to the outdoor units by piping and controls the number of operating outdoor units in accordance with the sum of the request capacity of each indoor unit is known.

In the refrigeration cycle apparatus, when the number of operating outdoor units is reduced, an excessive amount of refrigerant may flow in the outdoor unit on the side where the operation is continued. In this case, the liquid-refrigerant region in the outdoor heat exchanger in the outdoor unit on the side where the operation is continued is increased. The two-phase-refrigerant region in the outdoor heat exchanger is reduced. The heat-transfer efficiency in the outdoor heat exchanger is reduced. Accordingly, the cooling performance is degraded.

To solve this problem, a refrigeration apparatus which comprises a liquid receiver called a receiver tank in a refrigeration cycle and stores an excess refrigerant in the receiver tank is known (for example, Patent Literature 1).

### Citation List

### Patent Literature

Patent Literature 1: JP 2008-298335 A

### Summary of Invention

### Technical Problem

In the above refrigeration cycle apparatus, the cost is increased by the provision of the receiver tank.

Embodiments described herein aim to provide a refrigeration cycle apparatus in which an excessive amount of refrigerant does not flow in an outdoor unit on the side where the operation is continued.

### Solution to Problem

According to claim 1, a refrigeration cycle apparatus comprises: a plurality of outdoor units comprising a compressor, an outdoor heat exchanger and an outdoor fan, and connected by a refrigerant pipe; a plurality of indoor units comprising an indoor heat exchanger; and a controller which controls a number of operating outdoor units. The controller causes the outdoor fan of the outdoor unit to be stopped to operate at high speed and causes the compressor of the outdoor unit to operate at low capacity when the number of operating outdoor units is reduced. The controller stops the outdoor fan and the compressor of the outdoor unit to be stopped after the high-speed operation and the low-capacity operation are continued for a predetermined time.

### Brief Description of Drawings

FIG. 1 is a diagram showing the structure of a first embodiment.
FIG. 2 is a flowchart showing the control of the first embodiment.
FIG. 3 is a p-h diagram showing the state of a refrigeration cycle in the first embodiment.
FIG. 4 is a flowchart showing the control of a second embodiment.

### Mode for Carrying Out the Invention

### [1] First Embodiment

Hereinafter, this specification explains the first embodiment of a refrigeration cycle apparatus mounted on an air conditioner with reference to drawings.

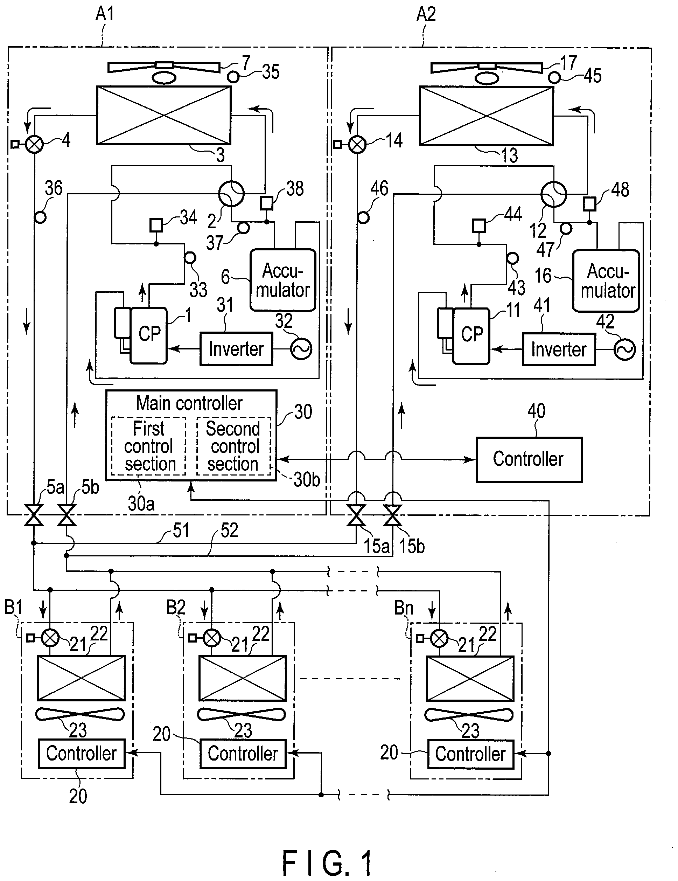

As shown in FIG. 1, a plurality of, for example, two outdoor units A1 and A2 are parallelly connected to each other by piping, and a plurality of indoor units B1, B2, ... Bn are connected to the outdoor units A1 and A2 by piping.

In the outdoor unit A1, an outdoor heat exchanger 3 is connected to the discharge port of a compressor 1 by piping via a four-way valve 2, and a liquid-side packed valve 5a is connected to the outdoor heat exchanger 3 by piping via an electric expansion valve 4. Further, the suction port of the compressor 1 is connected to a gas-side packed valve 5b by piping via the four-way valve 2 and an accumulator 6. An outdoor fan 7 is provided near the outdoor heat exchanger 3. The electric expansion valve 4 is a pulse motor valve (PMV) in which the aperture continuously changes in accordance with the number of input drive pulses.

In the outdoor unit A2, an outdoor heat exchanger 13 is connected to the discharge port of a compressor 11 by piping via a four-way valve 12, and a liquid-side packed valve 15a is connected to the outdoor heat exchanger 13 by piping via an electric expansion valve 14. Further, the suction port of the compressor 11 is connected to a gas-side packed valve 15b by piping via the four-way valve 12 and an accumulator 16. An outdoor fan 17 is provided near the outdoor heat exchanger 13. The electric expansion valve 14 is a pulse motor valve in which the aperture continuously changes in accordance with the number of input drive pulses.

The liquid-side packed valve 5a of the outdoor unit A1 is connected to the liquid-side packed valve 15a of the outdoor unit A2 by a connecting pipe 51, and the gas-side packed valve 5b of the outdoor unit A2 is connected to the gas-side packed valve 15b of the outdoor unit A2 by a connecting pipe 52.

The indoor heat exchangers 22 of the indoor units B1, B2, ... Bn are connected by piping to the other end side of the connecting pipe 51 connecting the liquid-side packed valve 5a of the outdoor unit A1 and the liquid-side packed valve 15a of the outdoor unit A2 via the electric expansion valves 21 of the indoor units B1, B2, ... Bn, and the other end side of the connecting pipe 52 connecting the gas-side packed valve 5b of the outdoor unit A1 and the gas-side packed valve 15b of the outdoor unit A2 is connected by piping to the indoor heat exchangers 22. An indoor fan 23 is provided near each indoor heat exchanger 22.

By the above piping connection, a heat-pump-type refrigeration cycle is structured.

The compressor 1 is structured by accommodating a motor operated by the output of an inverter 31 in a sealed casing, sucks a refrigerant which passed through the accumulator 6, compresses the sucked refrigerant and discharges it from the discharge port. The inverter 31 converts the alternating-current voltage of a commercial alternating-current power supply 32 into direct-current voltage, converts the direct-current voltage into alternating-current voltage having predetermined frequency F1 (Hz) and at a level corresponding to predetermined frequency F1, and outputs it. The compressor 11 is structured by accommodating a motor operated by the output of an inverter 41 in a sealed casing, sucks a refrigerant which passed through the accumulator 16, compresses the sucked refrigerant and discharges it from the discharge port. The inverter 41 converts the alternating-current voltage of a commercial alternating-current power supply 42 into direct-current voltage, converts the direct-current voltage into alternating-current voltage having predetermined frequency F2 (Hz) and at a level corresponding to predetermined frequency F2, and outputs it. Hereinafter, predetermined frequencies F1 and F2 are called operation frequencies F1 and F2.

At the time of cooling operation, as indicated by arrows, the refrigerant discharged from the discharge ports of the compressors 1 and 11 passes through the four-way valves 2 and 12, the outdoor heat exchangers 3 and 13, the electric expansion valves 4 and 14, the liquid-side packed valves 5a and 15a, the connecting pipe 51 and each electric expansion valve 21 and flows into each indoor heat exchanger 22. The refrigerant flowing out from each indoor heat exchanger 22 passes through the connecting pipe 52, the gas-side packed valves 5b and 15b, the four-way valves 2 and 12 and the accumulators 6 and 16 and is sucked into the suction ports of the compressors 1 and 11. By this flow of the refrigerant, the outdoor heat exchangers 3 and 13 function as condensers, and each indoor heat exchanger 22 functions as an evaporator.

A refrigerant temperature sensor 33 which detects temperature Td1 of the gaseous refrigerant discharged from the compressor 1 and a refrigerant pressure sensor 34 which detects pressure (high-pressure-side pressure) Pd1 of the gaseous refrigerant discharged from the compressor 1 are attached to a high-pressure-side pipe between the discharge port of the compressor 1 and the four-way valve 2. An outside air temperature sensor 35 which detects outside air temperature To1 is provided in the outside air inlet trunk of the outdoor fan 7. A refrigerant temperature sensor 36 which detects temperature Tx1 of the liquid refrigerant flowing out from the outdoor heat exchanger 3 is attached to a liquid-side pipe between the electric expansion valve 4 and the liquid-side packed valve 5a. A temperature sensor 37 which detects temperature Ts1 of the gaseous refrigerant sucked into the compressor 1 and a pressure sensor 38 which detects pressure (low-pressure-side pressure) Ps1 of the gaseous refrigerant sucked into the compressor 1 are attached to a low-pressure-side pipe between the four-way valve 2 and the accumulator 6.

A refrigerant temperature sensor 43 which detects temperature Td2 of the gaseous refrigerant discharged from the compressor 11 and a refrigerant pressure sensor 44 which detects pressure (high-pressure-side pressure) Pd2 of the gaseous refrigerant discharged from the compressor 11 are attached to a high-pressure-side pipe between the discharge port of the compressor 11 and the four-way valve 12. An outside air temperature sensor 45 which detects outside air temperature To2 is provided in the outside air inlet trunk of the outdoor fan 17. A refrigerant temperature sensor 46 which detects temperature Tx2 of the liquid refrigerant flowing out from the outdoor heat exchanger 13 is attached to a liquid-side pipe between the electric expansion valve 14 and the liquid-side packed valve 15a. A refrigerant temperature sensor 47 which detects temperature Ts2 of the gaseous refrigerant sucked into the compressor 11 and a pressure sensor 48 which detects pressure (low-pressure-side pressure) Ps2 of the gaseous refrigerant sucked into the compressor 11 are attached to a low-pressure-side pipe between the four-way valve 12 and the accumulator 16.

The outdoor unit A1 comprises a main controller 30. The main controller 30 is notified of the results of detection of the above refrigerant temperature sensors 33, 36 and 37, refrigerant pressure sensors 34 and 38, outside air temperature sensor 35, etc. The main controller 30 is connected to the controllers 20 of the indoor units B1, B2, ... Bn by communication lines and controls the four-way valve 2, the electric expansion valve 4, the outdoor fan 7 and the inverter 31 based on an instruction from each controller 20 and the results of detection of the above sensors provided in the outdoor unit A1.

The outdoor unit A2 comprises a controller 40. The controller 40 is notified of the results of detection of the above refrigerant temperature sensors 43, 46 and 47, refrigerant pressure sensors 44 and 48, outside air temperature sensor 45, etc. The controller 40 is connected to the main controller 30 by a communication line and controls the four-way valve 12, the electric expansion valve 14, the outdoor fan 17 and the inverter 41 based on an instruction from the main controller 30 and the results of detection of the above sensors provided in the outdoor unit A2.

The main controller 30 comprises a first control section 30a and a second control section 30b.

The first control section 30a controls the number of operating outdoor units of the outdoor units A1 and A2 and operation frequencies F1 and F2 of the compressors 1 and 11 in accordance with the sum of the request capacity of each controller 20 of the indoor units B1, B2, ... Bn.

When the number of operating units of the outdoor units A1 and A2 is reduced by the control section 30a, the second control section 30b causes the outdoor fan of the outdoor unit to be stopped to operate at high speed, causes the compressor of the outdoor unit to be stopped to operate at low capacity, continues the high-speed operation and the low-capacity operation for a predetermined time t, and subsequently stops the outdoor fan and the compressor of the outdoor unit to be stopped. The predetermined time t is, for example, a minute.

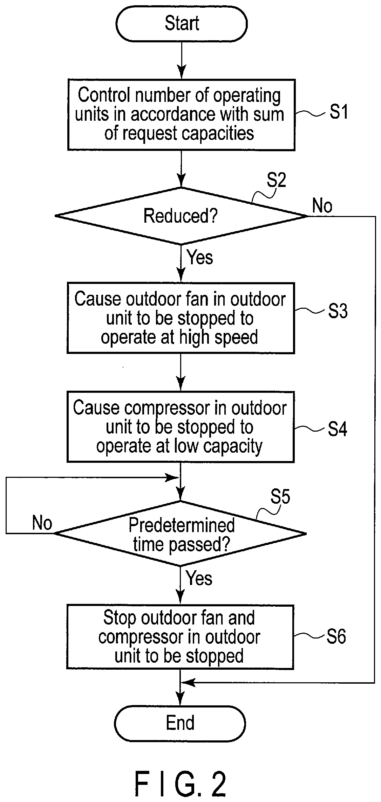

Now, this specification explains the control performed by the main controller 30 with reference to the flowchart of FIG. 2. In the flowchart, reference symbols S1 to S6 indicate processing steps.

At the time of cooling operation, the main controller 30 controls the number of operating units of the outdoor units A1 and A2 and the capacities (operation frequencies F1 and F2) of the compressors 1 and 11 in accordance with the sum of the request capacity of each controller 20 in the indoor units B1, B2, ... Bn (S1).

When it is necessary to reduce the number of operating units of the outdoor units A1 and A2 (YES in S2), the main controller 30 causes the outdoor fan 17 of the outdoor unit A2 to be stopped to operate at high speed (S3) and causes the compressor 11 of the outdoor unit A2 to operate at low capacity (S4).

When the low-capacity operation of the compressor 11 is performed, the main controller 30 sets, as the capacity value of the compressor 11, a value less than the current capacity (operation frequency F1) of the compressor 1 of the outdoor unit A1 on the side where the operation is continued.

When the outdoor fan 17 operates at high speed, the condensation of the refrigerant in the outdoor heat exchanger 13 is accelerated, and a large amount of liquid refrigerant is stored in the outdoor heat exchanger 13. Accordingly, the compressor 11 operates at low capacity. Thus, the refrigerant which passes through the liquid-side pipe on the electric expansion valve 14 side and the connecting pipe 51 from the outdoor heat exchanger 13 and flows into the indoor units B1, B2, ... Bn is reduced. At this time, the aperture of the electric expansion valve 14 may be small or fully closed. By decreasing the aperture of the electric expansion valve 14, the refrigerant flowing into the indoor units B1, B2, ... Bn can be further reduced.

Subsequently, the main controller 30 continues the high-speed operation of the above outdoor fan 17 and the low-capacity operation of the above compressor 11 for the predetermined time t (YES in S5). Subsequently, the main controller 30 stops the outdoor fan 17 and the compressor 11 (S6). After this stop, the main controller 30 returns to the process of the first step S1, and controls the number of operating units of the outdoor units A1 and A2 and controls the capacities of the compressors of the outdoor units to be operated in accordance with the sum of the request capacity of each controller 20 in the indoor units B1, B2, ... Bn.

As described above, when the outdoor fan 17 and the compressor 11 of the outdoor unit A2 to be stopped are operated at high speed and at low capacity in advance, a liquid refrigerant is stored in the outdoor heat exchanger 13 of the outdoor unit A2, and the refrigerant which passes from the outdoor heat exchanger 13 through the liquid-side pipe on the electric expansion valve 14 side and the connecting discharge pipe 51 and flows into the indoor units B1, B2, ... Bn is reduced. In this way, the problem in which an excessive amount of refrigerant flows in the outdoor unit A1 on the side where the operation is continued can be solved. A conventional receiver tank for decreasing the amount of refrigerant is unnecessary, thereby reducing the cost.

As an excessive amount of refrigerant does not flow in the outdoor unit A1, the liquid-refrigerant region in the outdoor heat exchanger 3 is not unnecessarily increased, and the two-phase-refrigerant region is not reduced. Thus, the heat-transfer efficiency of the outdoor heat exchanger 3 is not decreased. Since the heat-transfer efficiency of the outdoor heat exchanger 3 is not decreased, a cooling capacity suitable for the sum of the request capacities of the indoor units B1, B2, ... Bn can be obtained.

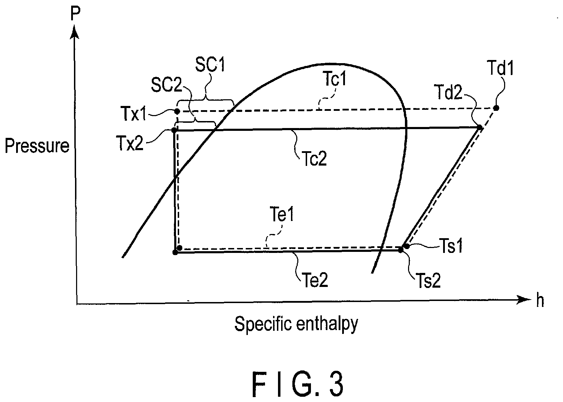

A refrigeration cycle state in an assumed case where an excessive amount of refrigerant flows in the outdoor unit A1 is shown in the p-h diagram (broken lines) of FIG. 3. When an excessive amount of refrigerant flows in the outdoor unit A1 on the side where the operation is continued, high-pressure-side refrigerant pressure Pd1 in the outdoor unit A1 is increased. When high-pressure-side refrigerant pressure Pd1 is increased and exceeds a predetermined value, control is performed to decrease the operation frequency of the compressor for device protection. Thus, the cooling capacity is decreased.

When a liquid refrigerant is excessively stored in the outdoor unit A2 to be stopped, a sufficient amount of refrigerant does not flow in the outdoor unit A1 on the side where the operation is continued. Thus, a cooling capacity suitable for the sum of the request capacities of the indoor units B1, B2, ... Bn cannot be ensured. In this case, in the process of S1, the operation of the outdoor fan 17 and the compressor 11 of the outdoor unit A2 is restarted. By this operation restart, a sufficient amount of refrigerant flows in the outdoor unit A1 on the side where the operation is continued.

### [2] Second Embodiment

This specification explains the second embodiment of a refrigeration cycle apparatus.

When the number of operating units of outdoor units A1 and A2 is reduced by a control section 30a, the second control section 30b of a main controller 30 causes the outdoor fan of the outdoor unit to be stopped to operate at high speed and causes the compressor of the outdoor unit to operate at low capacity on the condition that detection temperature (outside air temperature) To1 of an outside air temperature sensor 35 is greater than or equal to threshold Tos. The second control section 30b stops the outdoor fan and the compressor of the outdoor unit to be stopped after the high-speed operation and the low-capacity operation are continued for a predetermined time t.

Detection temperature To1 of the outside air temperature sensor 35 is substantially equal to outside air temperature To2 detected by an outside air temperature sensor 45 on the outdoor unit A2 side. Threshold Tos is used to determine whether outside air temperature To1 is in a medium/high temperature region or a low temperature region.

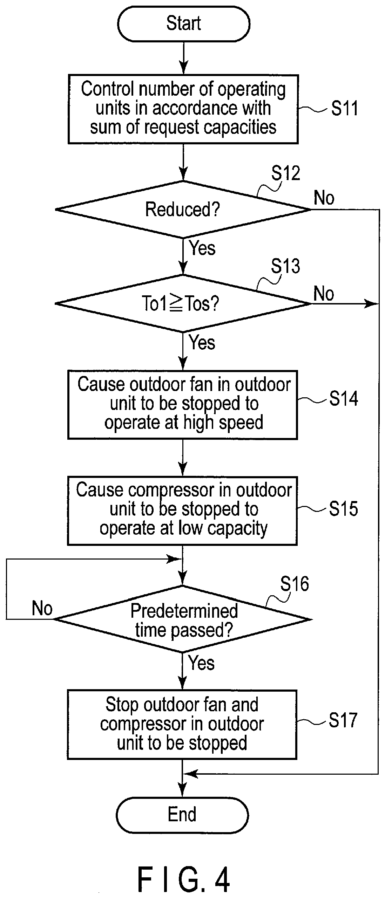

The control performed by the main controller 30 is explained with reference to the flowchart of FIG. 4. S11 to S17 indicate processing steps.

At the time of cooling operation, the main controller 30 controls the number of operating units of the outdoor units A1 and A2 and the capacities (operation frequencies F1 and F2) of compressors 1 and 11 in accordance with the sum of the request capacity of each controller 20 in indoor units B1, B2, ... Bn (S11).

When it is necessary to reduce the number of operating units of the outdoor units A1 and A2 (YES in S12), the main controller 30 determines whether or not detection temperature To1 of the outside air temperature sensor 35 is in a medium/high temperature region greater than or equal to threshold Tos (S13).

When outside air temperature To1 is in a medium/high temperature region greater than or equal to threshold Tos (YES in S13), the main controller 30 causes the outdoor fan 17 of the outdoor unit A2 to be stopped to operate at high speed (S14) and causes the compressor 11 of the outdoor unit A2 to operate at low capacity (S15) based on the determination that there is a possibility that an excessive amount of refrigerant flows in the outdoor unit A1 on the side where the operation is continued.

When the low-capacity operation of the compressor 11 is performed, the main controller 30 sets, as the capacity value of the compressor 11, a value less than the current capacity (operation frequency F1) of the compressor 1 of the outdoor unit A1 on the side where the operation is continued.

When the outdoor fan 17 operates at high speed, the condensation of the refrigerant in an outdoor heat exchanger 13 is accelerated, and a large amount of liquid refrigerant is stored in the outdoor heat exchanger 13. Accordingly, the compressor 11 operates at low capacity. Thus, the refrigerant which passes through a liquid-side pipe on the electric expansion valve 14 side and a connecting discharge pipe 51 from the outdoor heat exchanger 13 and flows into the indoor units B1, B2, ... Bn is reduced. Consequently, the amount of refrigerant flowing from the indoor units B1, B2, ... Bn to the outdoor unit A1 is also reduced. Subsequently, the main controller 30 continues the high-speed operation of the above outdoor fan 17 and the low-capacity operation of the above compressor 11 for a predetermined time t (YES in S16). Subsequently, the main controller 30 stops the outdoor fan 17 and the compressor 11 (S17). After this stop, the main controller 30 returns to the process of the first step S1, and controls the number of operating units of the outdoor units A1 and A2 and controls the capacities of the compressors of the outdoor units to be operated in accordance with the sum of the request capacity of each controller 20 in the indoor units B1, B2, ... Bn.

In the determination of the above S13, when outside air temperature To1 is in a low temperature region less than threshold Tos (NO in S13), the main controller 30 stops the outdoor fan 17 and the compressor 11 without performing the processes of the above S14 to S16 (S17).

When the processes of S14 to S16 are performed in a state where outside air temperature To1 is in a low temperature region less than threshold Tos, the amount of refrigerant stored in the outdoor heat exchanger 13 of the outdoor unit A2 may be excessively increased. Thus, there is a possibility that a sufficient amount of refrigerant does not flow in the outdoor unit A1 on the side where the operation is continued. To prevent this deviation of the amount of refrigerant, when outside air temperature To1 is in a low temperature region less than threshold Tos, the processes of S14 to S16 are not performed.

The other structures and effects are the same as those of the first embodiment. Thus, the explanation thereof is omitted.

### [3] Modified Examples

Each of the above embodiments is explained with an example in which the number of outdoor units is two. However, each embodiment may be implemented in a similar manner even when the number of outdoor units is three or more.

Each of the above embodiments is explained with an example in which the target to be stopped is the outdoor unit A2 and the side on which the operation is continued is the outdoor unit A1. However, as a matter of course, the target to be stopped may be the outdoor unit A1, and the side on which the operation is continued may be the outdoor unit A2. In the above second embodiment, the possibility that a sufficient amount of refrigerant does not flow in the outdoor unit A1 on the side where the operation is continued is determined by comparing outside air temperature To1 with threshold Tos. However, degree of undercooling SC1 on the outdoor unit A1 side may be compared with degree of undercooling SC2 on the outdoor unit A2 side. Based on the result of this comparison, the above possibility may be determined.

In FIG. 3, the state of the outdoor unit A1 on the side where the operation is continued is indicated by broken lines, and the state of the outdoor unit A2 to be stopped is indicated by solid lines. When the amount of refrigerant of the outdoor unit A1 on the side where the operation is continued is large, and the amount of refrigerant of the outdoor unit A2 to be stopped is small, high-pressure-side refrigerant pressure Pd1, condensation temperature Tc1 and degree of undercooling SC1 of the outdoor unit A1 are greater than high-pressure-side refrigerant pressure Pd2, condensation temperature Tc2 and degree of undercooling SC2 of the outdoor unit A2 to be stopped.

Here, degree of undercooling SC1 of the outdoor unit A1 can be obtained by the difference (= Tc1 - Tx1) between condensation temperature Tc1 and temperature Tx1 of the liquid refrigerant flowing out from the outdoor heat exchanger 3 (the detection temperature of the refrigerant temperature sensor 36). Similarly, degree of undercooling SC2 of the outdoor unit A2 can be obtained by the difference (= Tc2 - Tx2) between condensation temperature Tc2 and temperature Tx2 of the liquid refrigerant flowing out from the outdoor heat exchanger 13 (the detection temperature of the refrigerant temperature sensor 46). Condensation temperatures Tc1 and Tc2 can be obtained by an operation, using detection pressures (high-pressure-side refrigerant pressures) Pd1 and Pd2 of the refrigerant pressure sensors 34 and 44.

As described above, when degree of undercooling SC2 of the outdoor unit A2 to be stopped is less than degree of undercooling SC1 of the outdoor unit A1 on the side where the operation is continued, it is possible to determine that there is no possibility that a sufficient amount of refrigerant does not flow in the outdoor unit A1 on the side where the operation is continued as the amount of refrigerant of the outdoor unit A2 to be stopped is small.

Each of the above embodiments is explained with an example of a refrigeration cycle apparatus mounted on an air conditioner. However, each embodiment may be implemented in a similar manner in a refrigeration cycle apparatus mounted on other units such as a hot-water supply unit.

Each of the above embodiments and modified examples is shown as an example, and does not intend to limit the scope of the invention. The novel embodiments and modified examples described herein may be embodied in a variety of other forms; furthermore, various omissions, rewrites and changes in the form of the embodiments described herein may be made without departing from the spirit of the inventions. The accompanying claims and their equivalents are intended to cover such forms or modifications as would fall within the scope and spirit of the inventions.

### Reference Signs List

- A1, A2: Outdoor units
- B1, B2, ... Bn: Indoor units
- 1, 11: Compressors
- 2, 12: Four-way valves
- 3, 13: Outdoor heat exchangers
- 4, 14: Electric expansion valves
- 6, 16: Accumulators
- 7, 17: Outdoor fans
- 30: Main controller
- 40: Controller
- 21: Electric expansion valve
- 22: Indoor heat exchanger
- 23: Indoor fan
- 20: Controller
- 31, 41: Inverters

## Claims

1. A refrigeration cycle apparatus **characterized by** comprising:
a plurality of outdoor units comprising a compressor, an outdoor heat exchanger and an outdoor fan, and connected by a refrigerant pipe;
a plurality of indoor units comprising an indoor heat exchanger; and
a controller which controls a number of operating outdoor units, **characterized in that**
the controller causes the outdoor fan of the outdoor unit to be stopped to operate at high speed and causes the compressor of the outdoor unit to operate at low capacity when the number of operating outdoor units is reduced, and
the controller stops the outdoor fan and the compressor of the outdoor unit to be stopped after the high-speed operation and the low-capacity operation are continued for a predetermined time.

2. The refrigeration cycle apparatus of claim 1, **characterized in that**
the controller causes the outdoor fan of the outdoor unit to be stopped to operate at high speed and causes the compressor of the outdoor unit to operate at low capacity on a condition that an outside air temperature is greater than or equal to a threshold when the number of operating outdoor units is reduced.

3. The refrigeration cycle apparatus of claim 1 or claim 2, **characterized in that**
a capacity of the compressor operating at low capacity is less than a capacity of the compressor of the outdoor unit on a side where an operation is continued.
